# EUROPÄISCHE PATENTSCHRIFT

(11) **EP 1 143 237 B1**
(45) Veröffentlichungstag und Bekanntmachung des Hinweises auf die Patenterteilung: **07.05.2003**
(21) Anmeldenummer: 01106864.0
(22) Anmeldetag: 20.03.2001
(51) Int. Cl.: G01N 21/90

(54) **Verfahren und Vorrichtung zum optischen Überprüfen transparenter Behälter**
Device and method for optically inspecting transparent containers
Dispositif et procédé pour contrôler optiquement des récipients transparents

(30) Priorität: 06.04.2000 DE 10017126
(43) Veröffentlichungstag der Anmeldung: 10.10.2001
(73) Patentinhaber: KRONES AG, 93068 Neutraubling (DE)
(72) Erfinder: Lindner, Peter, 93104 Sünching (DE)

(56) Entgegenhaltungen:
- EP-A- 0 337 421
- DE-A- 3 532 068
- DE-A- 19 512 124
- US-A- 5 668 887

## Beschreibung

Die Erfindung betrifft ein Verfahren gemäß dem Oberbegriff des Anspruchs 1 und eine Vorrichtung gemäß dem Oberbegriff des Anspruchs 8.

Gemäß DE 35 32 068 C werden im Inspektionsbereich gleichzeitig mehrere kontinuierlich geförderte, beabstandete Flaschen optisch überprüft. Jede Flasche wird innerhalb des Inspektionsbereiches über mindestens 360° um ihre Längsachse gedreht. Mit einer einzigen Videokamera werden getaktet Teilabbildungen der Flaschenseitenwand erzeugt und für jede Flasche zu einer Abbildung zusammengesetzt, die in einer Auswerteeinrichtung untersucht wird, um Beschädigungen oder Verschmutzungen festzustellen. Die stationäre Beleuchtungseinrichtung weist eine Lichtquelle mit vorgeschaltetem Diffusor auf. Da die Lichtintensität am flächigen Austritt des Diffusors für alle sich davor befindenden Flaschen gleich ist, die Flaschen material- und/oder verschleißbedingt unterschiedliche Transparenzgrade haben können, variiert zwangsweise die Helligkeit der erzeugten Abbildungen, was die Qualität des Prüfresultats erheblich beeinträchtigt. Überbelichtete Abbildungen sind praktisch kaum auswertbar.

Aus DE 195 12 124 A1 ist eine Vorrichtung zum Überprüfen einzelner Flaschen auf Normabweichungen bekannt, die über eine Beleuchtungsvorrichtung mit veränderbarer Intensität verfügt. Die Intensität ist in Abhängigkeit der individuellen Transmission, die für jede zu untersuchende Flasche gemessen wird, anpaßbar.

In der Praxis werden als Beleuchtungseinrichtungen bereits auch LED-Leuchtschirme für die optische Überprüfung von zumindest teilweise transparenten Behältern eingesetzt, wobei die LEDs des Leuchtschirms gemeinsam aktiviert werden und eine bestimmte Lichtintensität erzeugen. Mit einer vorgeschalteten Messvorrichtung wird der Transparenzgrad jedes Behälters ermittelt und die Lichtintensität gegebenenfalls angepasst, wobei diese für die mehreren, durch den Inspektionsbereich hindurchgehenden Behälter jedoch nur einen Kompromiss darstellt, falls deren individuelle Transparenzgrade deutlich voneinander differieren.

Der Erfindung liegt die Aufgabe zugrunde, ein Verfahren der eingangs genannten Art sowie eine zum Durchführen des Verfahrens geeignete Vorrichtung anzugeben, mit denen die Behälter trotz variierender Transparenzgrade mit gleichbleibend hoher Qualität prüfbar sind.

Die gestellte Aufgabe wird verfahrensgemäß mit den Merkmalen des Anspruchs 1 und vorrichtungsgemäß mit den Merkmalen des Anspruchs 8 gelöst.

Indem verfahrensgemäß mit jedem Behälter ein für ihn konfiguriertes Lauflichtfeld mitläuft, lässt sich jeder Behälter besser überprüfen als mit einem stehenden, für alle gleichzeitig überprüften Behälter gleichförmigen Lichtfeld. Wird entweder beleuchtungsseitig die Lichtintensität des Lichtfeldes und/oder abbildungsseitig die Abbildungsempfindlichkeit dem individuellen Transparenzgrad des Behälters angepasst, während sich dieser mit seinem Lichtfeld bewegt, dann lassen sich Variationen der Transparenzgrade so kompensieren, dass zur Auswertung für jeden Behälter eine Abbildung erzeugt wird, die im wesentlichen gleich hell ist wie die Abbildung eines anderen Behälters mit anderem Transparenzgrad. Dadurch wird ein Einfluss des individuellen Transparenzgrades auf die Qualität der Auswertung eliminiert und eine gleichbleibend hohe Prüfgenauigkeit erzielt.

Da in der Vorrichtung der LED-Leuchtschirm einzeln oder gruppenweise aktivierbare LEDs aufweist, lässt sich mit der Steuereinrichtung ein auf den jeweils zu überprüfenden Behälter abgestimmtes Lichtfeld konfigurieren, das im Inspektionsbereich synchron mit dem Behälter mitläuft. Mit der Messvorrichtung wird der individuelle Transparenzgrad jedes Behälters ermittelt. Unter Berücksichtigung des Messergebnisses lässt sich die Lichtintensität im Lauflichtfeld so einstellen, dass Variationen der Transparenzgrade der Behälter kompensiert sind. Dies führt dazu, dass die zur Inspektion verwendete Kamera alle Behälter unabhängig von ihren individuellen Transparenzgraden die Helligkeit betreffend gleichartig abbildet. Zwischen den Abbildungen treten keine nennenswerten Helligkeitsunterschiede mehr auf. Verschmutzungen oder Beschädigungen werden so mit gleichbleibend hoher Qualität festgestellt. Da die einzeln oder gruppenweise aktivierbaren LEDs für jeden sich vor dem Leuchtschirm befindenden Behälter ein eigenes Lichtfeld konfigurieren und als Lauflichtfeld mit dem Behälter mitlaufen lassen, können ohne weiteres mehrere Behälter gleichzeitig mit trotzdem individuell angepasster Beleuchtung überprüft werden. Die Vorrichtung ist besonders zur Seitenwand-Durchlicht- pder Auflichtüberprüfung von aufrechtstehenden Flaschen aus Kunststoff oder Glas geeignet, die beim Überprüfen ggf. um ihre Längsachse gedreht werden können. Dies schließt nicht aus, Behälterbodenflächen oder -mündungsbereiche in der gleichen Weise zu überprüfen. Die Helligkeit der Abbildungen wird so gewählt, dass auch opake Verschmutzungen erkannt werden, andererseits aber keine Fehlaussonderungen von Behältern infolge zu geringer Helligkeit auftreten.

Da Variationen der Transparenzgrade beleuchtungs- und/oder empfängerseitig kompensiert werden, lassen sich im Inspektionsbereich mit hoher Prüfungsqualität mindestens zwei oder mehr in Förderrichtung beabstandete Behälter gleichzeitig überprüfen.

Bei einer einfachen Verfahrensvariante wird die Lichtintensität im Lauflichtfeld und/oder die Abbildungsempfindlichkeit über die Abbildungshöhe gleichförmig an den individuellen Gesamttransparenzgrad des Behälters angepasst. Dies führt schon bei Anwendungsfällen zu hoher Prüfqualität, bei denen die Behälter keine in Hochrichtung deutlich fluktuierenden Transparenzgrade haben.

Weiterhin kann es jedoch zweckmäßig sein, Variationen des Transparenzgrades jedes Behälters in Hochrichtung festzustellen und die Anpassung der Lichtintensität und/oder der Abbildungsempfindlichkeit korrespondierend auch mit diesen festgestellten Variationen vorzunehmen.

Gegebenenfalls werden sogar in Förderrichtung gegebene Variationen des Transparenzgrades ermittelt und beleuchtungsseitig und/oder empfängerseitig egalisiert.

Das Mitbewegen eines Lauflichtfeldes mit jedem Behälter und die Anpassung der Lichtintensität dieses Lauflichtfeldes an den individuellen Transparenzgrad des Behälters lässt sich verfahrenstechnisch einfach mit einem LED-Leuchtschirm aus einer Vielzahl einzeln oder gruppenweise aktivierbarer LEDs durchführen. Zweckmäßigerweise werden die LEDs in Reihen parallel zur Behälterachse aktiviert. Besonders günstig ist eine konturgleiche Beleuchtung.

Die Anpassung der Lichtintensität im Lauflichtfeld zwecks Ausgleichs von Transparenzgradvariationen oder zur Anpassung an den individuellen Transparenzgrad lässt sich verfahrenstechnisch einfach über die Stromstärke und/oder Blitzzeit und/oder die Anzahl bzw. Verteilung der aktivierten LEDs vornehmen.

Um die Prüfqualität weiter zu steigern, kann es zweckmäßig sein, die Lichtintensität und/oder die Abbildungsempfindlichkeit zusätzlich in Abhängigkeit von der Förderposition und/oder der Drehposition jedes Behälters im Inspektionsbereich zu variieren.
Beispielsweise kann der Ist-Abstand zwischen dem Behälter und der Kamera ein Parameter für eine solche Variation sein, oder bei einem unrunden Behälter die Drehposition bei der Abbildung in Relation zur Kamera. Die Informationen zum Berücksichtigen dieser Parameter werden verfahrenstechnisch einfach durch entsprechende Sensoren oder abgelegte Programme definiert.

Vorrichtungsgemäß ist die Steuereinrichtung so ausgebildet, dass sie auf dem LED-Leuchtschirm das jedem Behälter zuzuordnende Lichtfeld konfiguriert und mit dem Behälter durch den Inspektionsbereich bewegt. Die Kompensationseinrichtung nutzt die Information der Messvorrichtung, um die Lichtintensität im Lauflichtfeld entsprechen einzustellen. Die Steuereinrichtung und die Kompensationseinrichtung sorgen gemeinsam für im wesentlichen einheitlich helle Abbildungen unabhängig von Variationen der Transparenzgrade.

Dabei ist es zweckmäßig, die Steuereinrichtung und die Kompensationseinrichtung in einer gemeinsamen elektronischen Steuereinheit zusammenzufassen, der die Messresultate der Messvorrichtung und z.B. die Position und Geschwindigkeit jedes Behälters im Inspektionsbereich in Form von Signalen übermittelt werden.

Falls der Regelung jeweils ein Durchschnitts-Transparenzgrad zugrundegelegt wird, reicht eine einfache Messvorrichtung mit im wesentlichen nur einer Lichtquelle und einem Messempfänger.

Für den Fall, dass das Transparenzgrad-Profil des Behälters gemessen und bei der Einstellung der Lichtintensität bzw. Abbildungsempfindlichkeit berücksichtigt wird, ist eine Messvorrichtung nach Art einer Messzeile mit mehreren Messzellen und Messabschnitten und ggf. mehreren Lichtquellen günstig. Für die Profil-Information werden z.B. unterschiedliche Helligkeiten bei den Messzellen oder unterschiedliche Lichtstärken der Lichtquellen zum Erzielen gleicher Helligkeiten an den Messzellen berücksichtigt.

Bei einer einfachen Ausführungsform sind die LEDs im LED-Leuchtschirm in zur Behälterachse parallelen Reihen aktivierbar. Das Lauflichtfeld kann von einer oder mehreren Reihen konfiguriert werden, wobei nicht notwendigerweise sämtliche LEDs in einer Reihe aktiviert werden müssen.

Die Lichtintensität des Lauflichtfeldes lässt sich über die Stromstärke und/oder die Blitzzeit an dem gemessenen Transparenzgrad oder das Transparenzgradprofil anpassen. Es ist allerdings auch möglich, die Anzahl und/oder Verteilung der aktivierten LEDs zu variieren.

Im Hinblick auf gleichbleibend hohe Prüfqualität und die in modernen Vorrichtungen üblichen, hohen Fördergeschwindigkeiten der Behälter ist es zweckmäßig, in der Steuereinheit wenigstens einen Mikroprozessor, der entsprechend programmierbar ist, zu verwenden.

Der Mikroprozessor kann eine Programmspeichersektion aufweisen, in der, z.B. für einen bestimmten Behältertyp, bei der Anpassung der Lichtintensität und/oder Abbildungsempfindlichkeit wiederholt berücksichtigte Parameter ablegbar sind. Dies bietet sich insbesondere an, wenn eine einfache Messvorrichtung nur für einen Durchschnittstransparenzgrad vorgesehen ist und ein durchschnittliches Transparenzgradprofil der Behälter bekannt ist.

Die Vorrichtung eignet sich besonders zur Seitenwandinspektion von Glas- oder Kunststoffflaschen nach dem Durchlicht- oder Auflichtprinzip. Aber auch eine Bodenoder Mündungsinspektion ist denkbar.

Anhand der Zeichnung wird eine Ausführungsform des Erfindungsgegenstandes erläutert. Es zeigen:
- Fig. 1: schematisch einen längs zur Förderrichtung verlaufenden Vertikalschnitt einer Vorrichtung zum optischen Prüfen von Behältern, und
- Fig. 2: eine schematische Draufsicht der Fig. 1.

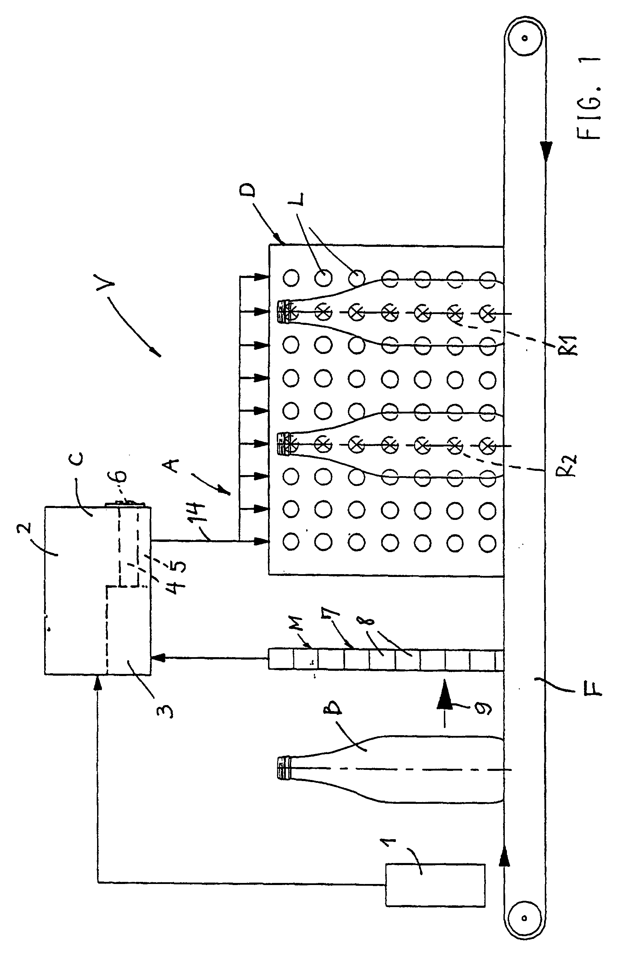

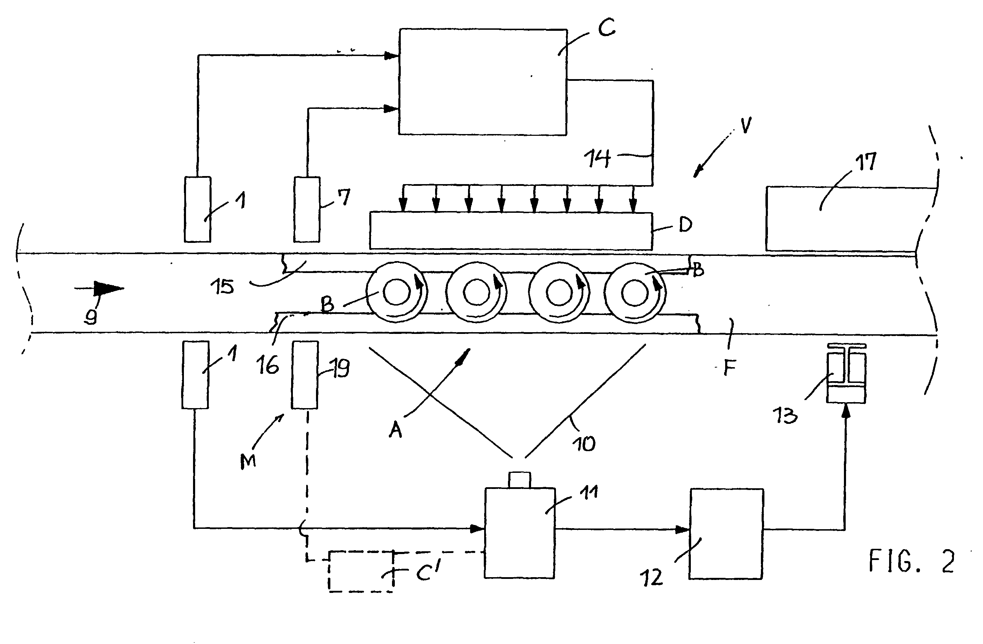

Eine in den Fig. 1 und 2 in einem Vertikalschnitt bzw. einer Draufsicht schematisch angedeutete Vorrichtung V zum optischen Überprüfen von Behältern B, weist einen Inspektionsbereich A auf, der von einer geradlinigen Fördervorrichtung F durchsetzt wird, die in Richtung des Pfeils 9 zu einer im wesentlichen kontinuierlichen Bewegung antreibbar ist. Stromauf des Inspektionsbereichs A ist ein Förderweg- oder -geschwindigkeits-Messsensor 1 angeordnet, der mit einer Steuereinheit C und einer in den Inspektionsbereich A gerichteten CCD-Kamera 11 signalübertragend verbunden ist. Ferner ist stromauf des Inspektionsschnitts oder sogar als Teil desselben eine Messvorrichtung M vorgesehen, die bei der gezeigten Ausführungsform aus einer Konstantlichtquelle 19 und einer auf diese ausgerichteten Messzeile 7 aus mehreren, übereinander angeordneten Messzellen 8 besteht. Die Messvorrichtung M ist ebenfalls an die Steuereinheit C angeschlossen.

Die Behälter B sind beispielsweise Flaschen aus Kunststoff oder Glas, also zumindest teilweise transparent und werden mit ausreichenden Abständen und einer bestimmten Fördergeschwindigkeit durch den Inspektionsbereich A gefördert. Bei der gezeigten Ausführungsform befinden sich jeweils mindestens zwei Behälter im Inspektionsbereich A.

Es könnten jedoch auch mehr als zwei Behälter gleichzeitig geprüft werden. Die Behälter B werden während der Überprüfung um ihre Längsachse rotiert, beispielsweise mit Hilfe zweier unterschiedlich schnell laufender Förderbänder 16, 15 der Fördervorrichtung F.

Der CCD-Kamera 11 gegenüberliegend ist als Beleuchtungseinrichtung wenigstens ein stationärer LED-Leuchtschirm D vorgesehen, der eine Vielzahl einzeln oder gruppenweise aktivierbarer LEDs L aufweist. Vor dem Objektiv der CCD-Kamera 11 kann eine nicht näher dargestellte Hilfsvorrichtung 10 angeordnet sein, so dass die CCD-Kamera 11 - wie üblich - Abbildungen der Behälter entlang des gesamten Inspektionsbereiches A zu erzeugen vermag.

In der Steuereinheit C ist eine Steuereinrichtung 2 enthalten, mit der aus einer bestimmte Anzahl aktivierter LEDs L ein Lichtfeld erzeugbar ist, das für einen Behälter B konfiguriert ist und z.B. mittels einer Treibereinrichtung 14 in Form eines Lauflichtfeldes geschwindigkeitssynchron mit dem Behälter entlang des LED-Leuchtschirms D bewegt wird, und zwar entsprechend den Signalen des Sensors 1. Ferner ist in der Steuereinheit C eine Kompensationseinrichtung 3 vorgesehen, mit der die Lichtintensität in dem Lauflichtfeld an den mit der Messvorrichtung M festgestellten Transparenzgrad des jeweiligen Behälters B angepasst wird. In der Steuereinheit C ist ferner mindestens ein Mikroprozessor 4 und eine Speichersektion 5 enthalten, in der bestimmte Parameter programmierbar sein können. Ferner kann ein Eingabe- bzw. Anzeigefeld 6 für die Steuereinheit C vorgesehen sein.

Die CCD-Kamera 11 ist mit einer Auswerteschalteinheit 12 verbunden, in der die von den Behältern abgeleiteten Abbildungen ausgewertet werden, um festzustellen, ob bei irgendeinem Behälter Beschädigungen und/oder Verschmutzungen zu finden sind. Dazu kann beispielsweise eine abgelegte Referenzabbildung genutzt werden. Wird ein beschädigter und/oder verschmutzter Behälter B ermittelt, dann wird er stromab des Inspektionsbereichs A ausgesondert. Zu diesem Zweck steht beispielsweise die Auswerteschaltungseinheit 12 mit einem Aussonderer 13 in Betätigungsverbindung.

Das jedem Behälter B zugeordnete, für ihn konfigurierte Lichtfeld wird beispielsweise (Fig. 1) durch wenigstens eine zur jeweiligen Behälterachse parallele Reihe R1, R2 an LEDs L gebildet. Es könnten die LEDs L jedoch auch in anderen Gruppierungen, z.B. behälterkonturgleich, aktiviert werden. Durch in Förderrichtung 9 aufeinanderfolgendes Aktivieren, z.B. jeweils einer Reihe, läuft die das Lichtfeld konfigurierende Reihe R1, R2 aktivierter LEDs L in Förderrichtung 9 synchron mit dem Behälter B mit. Die CCD-Kamera 11 erzeugt zu bestimmten Zeitpunkten Teilabbildungen für jeden während dem Vorbeilaufen wenigstens einmal um seine Längsachse rotierenden Behälter B. Die Teilabbildungen werden zu einer Abbildung für jeden Behälter zusammengefasst und dann ausgewertet.

Die Lichtintensität des mitbewegten Lichtfeldes wird so an den Transparenzgrad des Behälters angepasst, dass die CCD-Kamera in etwa gleich helle Abbildungen unabhängig von Variationen unter den gemessenen Transparenzgraden der einzelnen Behälter erzeugt. Beispielsweise wird für einen Behälter, der dunkler als andere ist, d.h. einen geringeren Transparenzgrad hat, die Lichtintensität erhöht, und umgekehrt. Dies kann durch die Regelung der Stromstärke und/oder der Blitzzeit und/oder Änderung der Anzahl (pro Flächeneinheit) der Gruppierung der aktivierten LEDs L vorgenommen werden.

Die gezeigte Messvorrichtung M misst dank der getrennten Messzellen 8 ein Transparenzgrad-Profil für den jeweiligen Behälter, beispielsweise einen geringeren Transparenzgrad im Schulter- und Mündungsbereich des Behälters und einen höheren Transparenzgrad im Rumpfbereich des Behälters. Diesem Transparenzgrad-Profil entsprechend variiert die Kompensationseinrichtung 3 die Lichtintensität über die Behälterhöhe, um den durch- oder beleuchteten Behälter über seine gesamte Höhe für die CCD-Kamera 11 durchgehend gleich hell erschienen zu lassen. Es ist denkbar, die Messvorrichtung so auszubilden, dass sie Transparenzgradvariationen in Förderrichtung misst, so dass die Lichtintensität im Lauflichtbild auch in Förderrichtung variiert werden kann. Ist eine Messvorrichtung mit einer Lichtquelle und nur einer Messzelle vorgesehen, so dass die Messvorrichtung einen Durchschnittstransparenzgrad des jeweiligen Behälters misst, dann kann im Programm des Mikroprozessors 4 oder in der Speichersektion 5 ein vorab ermitteltes Transparenzgradprofil abgelegt sein, das bei der Regelung der Lichtintensität des Lichtfeldes berücksichtigt wird.

In Fig. 2 ist gestrichelt eine weitere Steuereinheit C' angedeutet, die mit der Messvorrichtung M verbunden und auch an die CCD-Kamera 11 angeschlossen ist. Die Steuereinheit C' kann ähnlich ausgelegt sein wie die Steuereinheit C. Mit ihr lässt sich kameraseitig die Abbildungsempfindlichkeit für jeden Behälter B entsprechend dem gemessenen Transparenzgrad variieren, um für Behälter mit verschiedenen Transparenzgraden dennoch in etwa gleich helle Abbildungen zu erzeugen. Bei CCD-Kameras mit einem Flächenarray können die den einzelnen Behältern zugeordneten Pixelbereiche in ihrer Empfindlichkeit der Behälterbewegung entsprechend folgend variiert werden. Die beiden Maßnahmen, die Lichtintensität der LEDs L anzupassen oder die Abbildungsempfindlichkeit für jeden Behälter zu modulieren, können in Kombination alternativ oder additiv durchgeführt werden.

Die gezeigte Vorrichtung V dient z.B. zur Seitenwanddurchlicht- oder -auflicht-Überprüfung der (Flaschen) Behälter B. Die Vorrichtung kann in modifizierter Form auch oder nur zur Bodenprüfung bzw. Mündungs- oder Dichtflächenprüfung eingesetzt werden. Die Fördervorrichtung F ist mit geradem Förderweg dargestellt. Alternativ käme auch eine Rundfördervorrichtung oder dgl. in Frage. Bevorzugt lassen sich die LEDs L reihenweise aktivieren, wobei die vertikalen Reihen in Förderrichtung weitergeschaltet werden, um das mit dem Behälter mitlaufende Lauflichtfeld zu erzeugen. Das Lauflichtfeld könnte jedoch auch durch Einzelaktivierung der LEDs L erzeugt werden. Die Anpassung der Lichtintensität und/oder der Abbildungsempfindlichkeit erfolgt so, dass in etwa gleich helle Abbildungen erzeugt werden, deren Helligkeit so hoch ist, dass auch möglichst kleine oder opake Schäden oder Verunreinigungen an bzw. in den Behältern zuverlässig ermittelbar sind. Von dem beschriebenen Ausführungsbeispiel abweichend können auch mehrere Kameras zum Einsatz kommen, wobei die Kameras einzelnen Behältern zugeordnet sind und deren Bewegung folgen, z.B. mit gesteuerten Schwenkspiegeln (DE 34 07 386 C2).

Wird die Transparenzgradegalisierung bzw. -kompensation über die Lichtintensität des Lauflichtfeldes für jeden Behälter vorgenommen, dann kann mit fester Belichtungszeit und fester Belichtungseinstellung der CCD-Kamera gearbeitet werden.

### Verfahrensgemäß wird wie folgt vorgegangen:

Für jeden Behälter B wird in der Messvorrichtung M der individuelle Transparenzgrad gemessen, und zwar entweder als Durchschnitts-Transparenzgrad oder in Form eines Transparenzgrad-Profils. Die dadurch gewonnene Information wird in der Steuereinheit C eingesetzt, um die Lichtintensität des für diesen Behälter bei Eintritt in den Inspektionsbereich A konfigurierten Lichtfeldes jeweils so zu regeln, dass die CCD-Kamera 11 alle Behälter mit einem ausgewählten Helligkeitsniveau sieht, das unabhängig von den individuellen Transparenzgraden ist. Das für den Behälter konfigurierte Lichtfeld wird als Lauflichtfeld synchron mit dem jeweiligen Behälter über den LED-Leuchtschirm D bewegt. Dabei wird der Behälter um seine Hochachse gedreht. Die CCD-Kamera 11 erstellt zu bestimmten Zeitpunkten Teilabbildungen jedes Behälters, während sich der Behälter durch den Inspektionsbereich A bewegt. Die Teilabbildungen werden zu einer Abbildung des Behälters zusammengesetzt und in der Auswerteeinheit 12 ausgewertet und mit einer Referenz verglichen. Ergibt die Auswertung einen Schaden oder eine Verschmutzung, dann wird der Aussonderer 13 angesteuert, der zum richtigen Zeitpunkt den richtigen Behälter auf ein Ausleitförderband oder in einen Auffangbehälter 17 aussondert. Die Abbildungen können mit in etwa gleicher Helligkeit flankierend auch unter Verwenden der Steuereinheit C' abbildungsseitig geregelt werden, oder unter Nutzen des Lauflichtfeldes nur abbildungsseitig.

Grundsätzlich wird durch die Zuordnung eines synchron mit dem Behälter bewegten, für ihn konfigurierten Lauflichtfeldes auch bei mehreren gleichzeitig zu überprüfenden Behältern ein hoher Freiheitsgrad für steuerungs- oder regelungstechnische Einflussnahmen geschaffen, um Einflüsse unterschiedlicher Transparenzgrade oder Transparenzgradprofile auf die Helligkeit der Abbildungen zu eliminieren und die Prüfqualität zu steigern. Die Abkehr von einem stationären Lichtfeld zu individuellen Lauflichtbildern für die gerade geprüften Behälter setzt eine präzise steuer- bzw. regelbare Beleuchtungseinrichtung voraus. Diese Forderung lässt sich optimal mit wenigstens einem LED-Leuchtschirm erfüllen, der einzeln oder gruppenweise oder zeilenweise aktivierbare LEDs L aufweist, deren Lichtintensität sich durch die Stromstärke und/oder die Blitzzeit und/oder die Verteilung der aktivierten LEDs L schnell genug variieren lässt. Mit der Mikroprozessorsteuerung und dem Leistungsvermögen des wenigstens einen LED-Leuchtschirms lässt sich eine hohe Prüffrequenz beherrschen, wie sie für moderne Vorrichtungen dieser Art unabdingbar ist, wenn diese in einen schnellen Behälterverarbeitungsprozess eingegliedert sind und/oder mit anderen Anlagen kooperieren.

## Patentansprüche

1. Verfahren zum optischen Überprüfen von aufeinanderfolgend einen Inspektionsbereich (A) durchlaufenden, zumindest teilweise transparenten Behältern (B), insbesondere Flaschen, bei dem wenigstens zwei Behälter (B) gleichzeitig geprüft und mit Licht aus einer Beleuchtungseinrichtung (D) beaufschlagt und Abbildungen zumindest von Behälterteilen angefertigt und ausgewertet werden, **gekennzeichnet durch** folgende Schritte:
- Für jeden Behälter (B) wird der individuelle Transparenzgrad ermittelt,
- für diesen Behälter (B) wird ein Lichtfeld konfiguriert,
- die Lichtintensität des Lichtfeldes oder/und die Abbildungsempfindlichkeit wird dem ermittelten Transparenzgrad des Behälters (B) angepasst,
- das Lichtfeld wird als Lauflichtfeld synchron mit dem Behälter (B) **durch** den Inspektionsbereich (A) bewegt, um von Behältern (B) unterschiedlicher Transparenzgrade im wesentlichen einheitlich helle Abbildungen zu erzeugen.

2. Verfahren nach Anspruch 1, **dadurch gekennzeichnet, dass** die Lichtintensität im Lichtfeld und/oder die Abbildungsempfindlichkeit über die Abbildungshöhe gleichförmig an einen individuellen Gesamttransparenzgrad angepasst wird (werden).

3. Verfahren nach Anspruch 1, **dadurch gekennzeichnet, dass** zusätzlich über die Behälterhöhe vorliegende Variationen des Transparenzgrades ermittelt werden, und dass die Lichtintensität im Lichtfeld und/oder die Abbildungsempfindlichkeit korrespondierend mit ermittelten Variationen über die Behälterhöhe variabel angepasst wird (werden).

4. Verfahren nach Anspruch 1, **dadurch gekennzeichnet, dass** in Förderrichtung vorliegende Variationen des Transparenzgrades des Behälters (B) ermittelt oder berücksichtigt werden, und dass die Lichtintensität im Lichtfeld und/oder die Abbildungsempfindlichkeit innerhalb der in Förderrichtung gesehenen Breite des konfigurierten Lichtfeldes korrespondierend mit den ermittelten Variationen angepasst wird (werden).

5. Verfahren nach Anspruch 1, **dadurch gekennzeichnet, dass** in der als LED-Leuchtschirm mit einer Vielzahl LEDs (L) ausgebildeten Beleuchtungseinrichtung (D) das jeweilige Lauflichtfeld mit in Förderrichtung aufeinanderfolgend aktivierten LEDs (L), vorzugsweise zur Behälterachse parallelen LED Reihen, einer ausgewählten LED-Gruppe konfiguriert wird, und dass das konfigurierte Lichtfeld durch in Förderrichtung aufeinanderfolgend aktivierte LEDs (L) als das Lauflichtfeld synchron zum zugeordneten Behälter (B) über den LED-Leuchtschirm getrieben wird.

6. Verfahren nach Anspruch 5, **dadurch gekennzeichnet, dass** die Anpassung der Lichtintensität im Lichtfeld an den Transparenzgrad über die Stromstärke und/oder Blitzzeit und/oder die Anzahl bzw. Verteilung der aktivierten LEDs (L) in der Gruppe vorgenommen wird.

7. Verfahren nach wenigstens einem der vorhergehenden Ansprüche, **dadurch gekennzeichnet, dass** die Lichtintensität im Lichtfeld und/oder die Abbildungsempfindlichkeit zusätzlich in Abhängigkeit von der Förderposition oder von der Drehposition des Behälters (B) im Inspektionsbereich (A) variiert wird (werden).

8. Vorrichtung (V) zum gleichzeitigen optischen Überprüfen von wenigstens zwei zumindest teilweise transparenten Behältern (B), insbesondere aus Glas oder Kunststoff bestehender Flaschen, mit einer einen Inspektionsbereich (A) durchsetzenden, kontinuierlich antreibbaren Behälter-Fördervorrichtung (F), mit einer im Inspektionsbereich (A) auf die Behälter (B) ausgerichteten Beleuchtungseinrichtung, und mit wenigstens einer elektronischen Kamera (11), der eine Abbildungs-Auswerteeinrichtung (12) zugeordnet ist, **dadurch gekennzeichnet, dass** die Beleuchtungseinrichtung einen LED-Leuchtschirm (D) mit einer Vielzahl einzeln oder gruppenweise aktivierbarer LEDs (L) aufweist, dass stromauf des Inspektionsbereichs (A) eine Messvorrichtung (M) für den individuellen Transparenzgrad jedes Behälters (B) angeordnet ist, und dass der LED-Leuchtschirm (D) an eine Lauflichtfeld-Steuereinrichtung (2) zur Erzeugung eines synchron mit jedem einzelnen Behälter durch den Inspektionsbereich bewegten Lauflichtfeldes und eine Transparenzgrad-Unterschieds-Kompensationseinrichtung (3) angeschlossen ist, mit der die Lichtintensität des Lauflichtfeldes oder/und die Abbildungsempfindlichkeit dem ermittelten Transparenzgrad des jeweiligen Behälters (B) anpassbar ist.

9. Vorrichtung nach Anspruch 8, **dadurch gekennzeichnet, dass** mit der Steuereinrichtung (2) zum Konfigurieren eines mit jedem Behälter (B) synchron mitbewegten Lauflichtfeldes einzelne LEDs oder LED-Gruppen (L) in Förderrichtung (9) aufeinanderfolgend aktivierbar sind, und dass mit der Kompensationseinrichtung (3) die Lichtintensität der aktivierten LEDs (L) korrespondierend mit dem gemessenen Transparenzgrad des Behälters einstellbar ist, um von Behältern unterschiedlicher Transparenzgrade im wesentlichen einheitlich helle Abbildungen zu erzielen.

10. Vorrichtung nach Anspruch 8, **dadurch gekennzeichnet, dass** die Behälter (B) in Fördervorrichtung (9) voneinander beabstandet sind, dass sich der Inspektionsbereich (A) zur gleichzeitigen Überprüfung mindestens zweier bei der Überprüfung rotierender, aufeinanderfolgender Behälter (B) in Förderrichtung (9) über mindestens zwei aufeinanderfolgende Behälter (B) erstreckt, und dass mit der Steuereinrichtung (2) eine der Anzahl der Behälter (B) entsprechende Anzahl von Lauflichtfeldern steuerbar ist, und dass mit der Kompensationseinrichtung (3) die Lichtintensität jedes einem Behälter zugeordneten Lauflichtfeldes individuell an den Transparenzgrad dieses Behälters anpassbar ist.

11. Vorrichtung nach Anspruch 8, **dadurch gekennzeichnet, dass** die Steuereinrichtung (2) und die Kompensationseinrichtung (3) in einer Steuereinheit (C) zusammengefasst sind, die signalübertragend mit der Messvorrichtung (M) und einem Positions- und Fördergeschwindigkeitsgeber (1) verbunden ist.

12. Vorrichtung nach Anspruch 8, **dadurch gekennzeichnet, dass** die Messvorrichtung (M) einen Lichtsensor mit einer im wesentlichen punktförmigen Lichtquelle (19) und einen Messempfänger (7) zur Feststellung eines Durchschnittstransparenzgrades des jeweiligen Behälters aufweist.

13. Vorrichtung nach Anspruch 8, **dadurch gekennzeichnet, dass** die Messvorrichtung (M) ein in etwa in Richtung der Behälterachse ausgerichtete Helligkeitsmesszelle (7) auf mehreren getrennten Messabschnitten (8) und/oder mehreren Lichtquellen zur Feststellung eines Transparenzgrad-Profils aufweist.

14. Vorrichtung nach Anspruch 8, **dadurch gekennzeichnet, dass** die LEDs (L) im LED-Leuchtschirm (D) parallel zur Behälterachse reihenweise aktivierbar sind.

15. Vorrichtung nach Anspruch 8, **dadurch gekennzeichnet, dass** die Stromstärke und/oder die Blitzzeit für die Aktivierung der LEDs (L) veränderbar ist (sind).

16. Vorrichtung nach Anspruch 11, **dadurch gekennzeichnet, dass** die Steuereinheit (C) wenigstens einen Mikroprozessor (4) enthält.

17. Vorrichtung nach Anspruch 16, **dadurch gekennzeichnet, dass** dem Mikroprozessor (4) eine Programm-Speichersektion (5) zugeordnet ist, in der mit einem Transparenzgrad-Profil der Behälter korrespondierende Parameter ablegbar sind.

18. Vorrichtung nach wenigstens einem der Ansprüche 8 bis 17, **dadurch gekennzeichnet, dass** es sich um eine Seitenwand-Durchlicht-Flaschen-Inspektionsvorrichtung (V) handelt.

## Claims

1. Method for optical inspection of containers (B), in particular bottles, which pass one after the other through an inspection area (A) and which are at least partially transparent, in which at least two containers (B) are simultaneously inspected and illuminated by light of an illumination device (D) and images of at least portions of containers are produced and evaluated, **characterised by** the following stages:
• an individual degree of transparency is determined for each container (B);
• a light field is configured for this container (B);
• the light intensity of the light field or/and the imaging sensitivity is matched to the determined degree of transparency of the container (B);
• the light field is as a moving light field moved synchronously with the container (B) through the inspection area (A) so that substantially unitarily bright images of containers (B) of different degrees of transparency are produced.

2. Method according to Claim 1, **characterised in that** the light intensity in the light field and/or the imaging sensitivity over the imaging height is/are uniformly matched to an individual overall degree of transparency.

3. Method according to Claim 1, **characterised in that** additionally variations of the degree of transparency above container height are determined, and the light intensity in the light field and/or the imaging sensitivity is/are variably matched to correspond with determined variations over the container height.

4. Method according to Claim 1, **characterised in that** variations of the degree of transparency of the container (B) in the conveying direction are determined or taken into account, and the light intensity in the light field and/or the imaging sensitivity within the width of a configured light field as seen in the conveying direction is/are correspondingly matched to the determined variations.

5. Method according to Claim 1, **characterised in that** in the illuminating device (D), which is designed as an LED illuminating screen with a plurality of LEDs (L), a respective moving light field is configured with LEDs (L) of a selected LED group which are successively activated in the conveying direction, preferably in parallel LED rows relative to the container axis, and the configured light field is driven via the LED screen by LEDs (L) which are synchronously to the associated container (B) successively activated in the conveying direction as moving light field.

6. Method according to Claim 5, **characterised in that** matching of light intensity in the light field to the degree of transparency is carried out via the amperage and/or flash time and/or number or distribution of activated LEDs (L) in the group.

7. Method according to at least one of the above claims, **characterised in that** the light intensity in the light field and/or the imaging sensitivity is/are additionally varied in dependence of the conveying position or the rotary position of the container (B) in the inspection area (A).

8. Device (V) for simultaneous optical inspection of at least two at least partially transparent containers (B), in particular bottles of glass or plastic, comprising a continuously driven container conveying device (F) which passes through an inspection area (A), an illuminating device which is in the inspection area (A) oriented towards the containers (B), and at least one electronic camera (11) associated to an imaging/evaluating device (12), **characterised in that** the illuminating device comprises an LED screen (D) with a plurality of LEDs (L) which are activated individually or in groups, upstream of the inspection area (A) is arranged a measuring device (M) for the individual degree of transparency of each container (B), and the LED screen (D) is linked to a movement light field control device (2) for producing a moving light field which is moved synchronously with each individual container through the inspection area and a degree of transparency differentiating/compensating device (3) by means of which the light intensity of the moving light field and/or the imaging sensitivity is matched to a determined degree of transparency of a respective container (B).

9. Device according to Claim 8, **characterised in that** individual LEDs or LED groups (L) are successively activated in the conveying direction (9) by means of the control device (2) for the purpose of configuring a moving light field which is synchronously moved along with each container (B), and the light intensity of activated LEDs (L) is set by the compensating device (3) so as to correspond with the measured degree of transparency of the container in order that substantially unitary bright images are obtained from containers of different degrees of transparency.

10. Device according to Claim 8, **characterised in that** the containers (B) are spaced apart in the conveying direction (9), for the purpose of simultaneous inspection of at least two successive containers (B) which rotate during inspection in the conveying direction (9), the inspection area (A) extends over at least two successive containers (B), and a number of moving light fields to correspond with the number of containers (B) can be controlled by means of the control device (2), and the light intensity of each moving light field which is associated with a container is individually matched to the degree of transparency of the container by means of the compensating device (3).

11. Device according to Claim 8, **characterised in that** the control device (2) and the compensating device (3) are combined in a control unit (C) which is in a signal transmitting manner linked to the measuring device (M) and a position and conveyer speed controller (1).

12. Device according to Claim 8, **characterised in that** the measuring device (M) comprises a light sensor with a substantially pointshaped light source (19) and a measuring receiver (7) for determining a mean degree of transparency of a respective container.

13. Device according to Claim 8, **characterised in that** the measuring device (M) comprises, for the purpose of determining a degree of transparency profile, on a plurality of separate measuring sections (8) and/or a plurality of light sources a brightness measuring cell (7) which is oriented approximately in the direction of the container axis.

14. Device according to Claim 8, **characterised in that** the LEDs (L) in the LED screen (d) can be activated parallel to the container axis in series.

15. Device according to Claim 8, **characterised in that** the amperage and/or flash time for activating the LEDs (L) is/are variable.

16. Device according to Claim 11, **characterised in that** the control unit (C) includes at least one microprocessor (4).

17. Device according to Claim 16, **characterised in that** the microprocessor (4) is associated to a program memory section (5) where parameters are stored which correspond with a degree of transparency profile.

18. Device according to at least one of Claims 8 to 17, **characteirsed in that** this is a bottle inspection device (V) with light passing through a sidewall.

## Revendications

1. Procédé de contrôle optique de récipients (B) au moins en partie transparents, qui parcourent les uns à la suite des autres une plage d'inspection (A),
selon lequel au moins deux récipients (B) sont contrôlés simultanément et sont exposés à la lumière d'une installation d'éclairage (D), on réalise des images des parties de récipients et on exploite ces images,
**caractérisé en ce qu'**
- on détermine le degré de transparence individuelle de chaque récipient (B),
- on configure un champ lumineux pour ce récipient (B),
- on adapte l'intensité lumineuse du champ lumineux et/ou la sensibilité de l'image en fonction du degré de transparence déterminé du récipient (B),
- on déplace le champ lumineux comme champ lumineux courant en synchronisme avec le récipient à travers la zone d'inspection (A), pour créer des images ayant une luminosité uniforme pour des récipients (B) ayant un degré de transparence différent.

2. Procédé selon la revendication 1,
**caractérisé en ce qu'**
on adapte l'intensité lumineuse du champ lumineux et/ou la sensibilité de l'image en fonction de la hauteur de l'image, de manière régulière au degré de transparence globale individuelle.

3. Procédé selon la revendication 1,
**caractérisé en ce qu'**
en plus on détermine les variations du degré de transparence en fonction de la hauteur du récipient, et
on adapte l'intensité du champ lumineux et/ou la sensibilité de l'image suivant les variations obtenues en fonction de la hauteur du récipient.

4. Procédé selon la revendication 1,
**caractérisé en ce qu'**
on détermine les variations du degré de transparence du récipient (B) dans le sens du transfert pour en tenir compte, et
on adapte l'intensité lumineuse dans le champ lumineux et/ou la sensibilité de l'image dans le champ lumineux configuré suivant la largeur d'un dispositif de transfert en fonction des variations obtenues.

5. Procédé selon la revendication 1,
**caractérisé en ce que**
dans l'écran à diodes électroluminescentes LED, comportant un grand nombre de diodes LED (L) formant l'installation d'éclairage (D), on configure le champ lumineux courant respectif avec des diodes LED, (L) activées successivement dans la direction de transfert de préférence dans des rangées de diodes LED parallèles à l'axe du récipient, configurées en un groupe de diodes LED sélectionnées et ce champ lumineux configuré est déplacé par les diodes LED (L), activées successivement dans la direction de transfert, comme champ lumineux courant en synchronisme avec le récipient (B) associé, en travers de l'écran à diodes LED.

6. Procédé selon la revendication 5,
**caractérisé en ce que**
l'adaptation de l'intensité lumineuse du champ lumineux est faite en fonction du degré de transparence suivant l'intensité du courant et/ou la durée d'éclairage et/ou le nombre et la répartition de diodes LED, activées (L) dans le groupe.

7. Procédé selon l'une quelconque des revendications précédentes,
**caractérisé en ce que**
l'on modifie l'intensité lumineuse du champ lumineux et/ou la sensibilité de l'image en plus suivant la position de transfert ou suivant la position de rotation du récipient (B) dans la zone d'inspection (A).

8. Dispositif (V) pour contrôler de manière optique simultanée au moins deux récipients (B) au moins partiellement transparents notamment des bouteilles en verre ou en matière plastique, comprenant un dispositif de transfert de récipients (B), entraîné en continu, passant dans une zone d'inspection (A),
une installation d'éclairage dirigée sur les récipients (B) dans la zone d'inspection (A), et
au moins une caméra électronique (11) associée à une installation d'exploitation d'image (12),
**caractérisé en ce que**
l'installation d'éclairage est formée d'un écran à diodes électroluminescentes (D) ayant un grand nombre de diodes LED (L) qui peuvent être activées séparément ou par groupe,
en amont de la plage d'inspection (A), il est prévu un dispositif de mesure (M) pour le degré de transparence individuelle de chaque récipient (B), et
l'écran lumineux à diodes LED est relié à une installation de commande de champ lumineux courant (2) pour générer un champ lumineux courant qui se déplace à travers la zone d'inspection avec chaque récipient et une installation de compensation des différences de degré de transparence (3) qui adapte l'intensité lumineuse du champ lumineux courant et/ou la sensibilité d'image au degré de transparence obtenue pour chaque récipient (B).

9. Dispositif selon la revendication 8,
**caractérisé en ce que**
l'installation de commande (2) pour configurer un champ lumineux courant déplacé en synchronisme avec chaque récipient (B), active successivement des diodes LED séparées ou des diodes LED (L) dans le sens de déplacement (9), et
l'installation de compensation (3) règle l'intensité lumineuse des diodes LED activées (L) correspondant au degré de transparence mesuré du récipient pour obtenir des images de luminosité essentiellement uniformes pour des récipients ayant des degrés de transparence différents.

10. Dispositif selon la revendication 8,
**caractérisé en ce que**
les récipients (B) sont écartés les uns des autres dans le dispositif de transfert (9),
la plage d'inspection (A) pour le contrôle simultané d'au moins deux récipients (B) successifs, tournant pour le contrôle, s'étend dans le sens de déplacement (9) sur au moins deux récipients (B) successifs, et
l'installation de commande (2) active un nombre de champs lumineux courants correspondant au nombre de récipients (B), et
l'installation de compensation (3) adapte l'intensité lumineuse de chaque champ lumineux courant associé à un récipient, de manière individuelle selon le degré de transparence de ce récipient.

11. Dispositif selon la revendication 8,
**caractérisé en ce que**
l'installation de commande (2) et l'installation de compensation (3) sont groupées dans une unité de commande (C) reliée dans le sens de la transmission de signaux au dispositif de mesure (M) et à un capteur de position et de vitesse de transfert (1).

12. Dispositif selon la revendication 8,
**caractérisé en ce que**
le dispositif de mesure (M) comporte un photocapteur avec une source lumineuse (19) essentiellement ponctuelle et un récepteur de mesure (7) pour déterminer le degré de transparence moyen du récipient respectif.

13. Dispositif selon la revendication 8,
**caractérisé en ce que**
le dispositif de mesure (M) comporte une cellule de mesure de luminosité (7) alignée sensiblement en direction de l'axe du récipient ayant plusieurs segments de mesure (8) séparés et/ou plusieurs sources lumineuses pour déterminer un profil de degré de transparence.

14. Dispositif selon la revendication 8,
**caractérisé en ce que**
les diodes LED (L) peuvent être activées dans l'écran à diodes LED (D), parallèlement à l'axe du récipient, par une mise en oeuvre en série.

15. Dispositif selon la revendication 8,
**caractérisé en ce que**
l'intensité du courant et/ou la durée du flash pour activer les diodes LED (L) est variable.

16. Dispositif selon la revendication 11,
**caractérisé en ce que**
l'unité de commande (C) comporte au moins un microprocesseur (4).

17. Dispositif selon la revendication 16,
**caractérisé en ce que**
le microprocesseur (4) comporte une section de mémoire de programme contenant les paramètres correspondant au profil de degré de transparence des récipients.

18. Dispositif selon l'une quelconque des revendications 8 à 17,
**caractérisé en ce qu'**
il constitue un dispositif d'inspection de bouteilles par transparence de la paroi latérale (V).
